(19) Europäisches Patentamt
European Patent Office
Office européen des brevets

(11) **EP 2 387 017 B1**

(12) **EUROPÄISCHE PATENTSCHRIFT**

(45) Veröffentlichungstag und Bekanntmachung des Hinweises auf die Patenterteilung:
**22.06.2016 Patentblatt 2016/25**

(51) Int Cl.:
**G08G 1/01** *(2006.01)*     **G08G 1/04** *(2006.01)*
**G06T 7/00** *(2006.01)*     **G06K 9/00** *(2006.01)*
**G06K 9/62** *(2006.01)*

(21) Anmeldenummer: **11003723.1**

(22) Anmeldetag: **06.05.2011**

(54) **Verfahren und Vorrichtung zur Erfassung von Verkehrsdaten aus digitalen Luftbildsequenzen**

Method and device for generating traffic data from digital aerial image sequences

Procédé et dispositif de détection de données de trafic à partir de séquences d'images aériennes numériques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2010 DE 102010020298**

(43) Veröffentlichungstag der Anmeldung:
**16.11.2011 Patentblatt 2011/46**

(73) Patentinhaber: **Deutsches Zentrum für Luft- und Raumfahrt e.V.**
**51147 Köln (DE)**

(72) Erfinder:
• **ROSENBAUM, Dominik**
  **82110 Germering (DE)**
• **LEITLOFF, Jens**
  **82216 Maisach (DE)**

(74) Vertreter: **Rasch, Michael**
**Rösler - Rasch - van der Heide & Partner**
**Patent- und Rechtsanwälte PartG mbB**
**Bodenseestrasse 18**
**81241 München (DE)**

(56) Entgegenhaltungen:
**US-A1- 2002 159 627     US-A1- 2008 089 579**

• **DOMINIK ROSENBAUM ET AL: "Towards automatic near real-time traffic monitoring with an airborne wide angle camera system", EUROPEAN TRANSPORT RESEARCH REVIEW, Bd. 1, Nr. 1, 7. Dezember 2008 (2008-12-07), Seiten 11-21, XP055068900, ISSN: 1867-0717, DOI: 10.1007/s12544-008-0002-1**
• **GRABNER H ET AL: "On-line boosting-based car detection from aerial images", ISPRS JOURNAL OF PHOTOGRAMMETRY AND REMOTE SENSING, AMSTERDAM [U.A.] : ELSEVIER, AMSTERDAM, NL, Bd. 63, Nr. 3, 25. Januar 2008 (2008-01-25), Seiten 382-396, XP022639952, ISSN: 0924-2716, DOI: 10.1016/J.ISPRSJPRS.2007.10.005 [gefunden am 2008-01-25]**
• **Ines Ernst ET AL: "New approaches for real time traffic data acquisition with airborne systems", TRB Transportation Research Board, TRB 2005, 31. Januar 2005 (2005-01-31), Seiten 69-73, XP055069061, Berlin-Adlershof Gefunden im Internet: URL:http://www.isprs.org/proceedings/xxxvi /3-w24/papers/CMRT05_Ernst_et_al.pdf [gefunden am 2013-07-02]**

**Beschreibung**

Die Erfindung bezieht sich auf ein Verfahren und eine Vorrichtung zur Erfassung von Verkehrsdaten aus einer Sequenz sich teilweise überlappender, georeferenzierter digitaler Luftbilder, in denen von Fahrzeugen benutzbare Verkehrswege eines Verkehrswegenetzes abgebildet sind, wobei zur Ermittlung der Verkehrsdaten in der Sequenz von digitalen Luftbildern eine Fahrzeugerkennung und ein Fahrzeugtracking erfolgt.

Der Begriff "Luftbild" wird vorliegend im Sinne von Bildaufnahmen der Erdoberfläche, die bspw. von Flugkörpern oder Satelliten aus mit Sensoren aufgenommen wurden, die elektromagnetische Strahlung, insbesondere optische Strahlung, erfassen. Der Begriff "Tracking" wird vorliegend im Sinne von Spurbildung oder Nachführung verstanden. Zum Tracking eines Fahrzeuges werden aus der Sequenz der digitalen Luftbilder Informationen zumindest über den Verlauf der Bewegung des Fahrzeugs extrahiert.

Das starke Verkehrsaufkommen der heutigen Zeit erfordert wirkungsvolle Systeme zur Erfassung der aktuellen Verkehrslage. Dabei ist es insbesondere für die Verkehrsleitzentralen wichtig, möglichst schnell zu erfahren, wo der Verkehr mit welcher Geschwindigkeit fließt, um einen möglichen Stau erkennen oder zu prognostizieren und entsprechende Gegenmaßnahmen einleiten zu können.

Zur Erfassung der Verkehrslage sind im Stand der Technik verschiedene Verfahren und Systeme bekannt. So sind in Bereichen mit regelmäßig hohem Verkehrsaufkommen häufig Induktionsschleifen in der Straße oder Überwachungskameras an Brücken, Schilderbrücken, etc. installiert. Mittels der Induktionsschleifen kann die Geschwindigkeit von Fahrzeugen ermittelt werden. Mittels der von Überwachungskameras erfassten Daten können einzelne Fahrzeuge durch Bildverarbeitung automatisch erkannt und ihre Bewegung über eine Bildserie hinweg gemessen werden. Mit einer derartigen bodengebundene Infrastruktur kann die Anzahl und die Geschwindigkeit von Fahrzeugen auf der Straße punktuell erfasst werden. Eine flächendeckende Verteilung dieser bodengebundenen Sensoren z.B. auf das gesamte Gebiet einer Großstadt wäre sehr kostenintensiv. Daher beschränkt sich die Installation dieser Sensoren zumeist auf die Hauptverkehrsstraßen des Straßennetzes. Durch eine optimierte Verteilung dieser punktuellen verfügbaren Sensoren, kann die Verkehrslage auf den Hauptstraßen weitestgehend erfasst werden. Die Verkehrslage auf den Nebenverkehrsstraßen bleibt dabei jedoch meistens unerfasst. Mit den gesamten stationären Sensoren kann die Verkehrssituation derzeit zu ca. 80% erfasst werden, da zum einen von einer intakten Induktionsschleife/Kamera nicht alle Fahrzeuge erfasst werden, zum anderen bei einem so großen Sensornetzwerk immer eine gewisse Anzahl der Sensoren gerade komplett ausgefallen ist. Die bekannte bodengebundene Infrastruktur zur Verkehrslageerfassung liefert somit punktuell exakte Verkehrsdaten mit hoher zeitlicher Auflösung und Aktualität. Jedoch ist die räumliche Verteilung der Sensoren zur Verkehrsdatenerfassung hauptsächlich auf Autobahnen und Hauptverkehrsstraßen beschränkt, so dass die Verkehrslage auf Nebenverkehrsstraßen und deren Entwicklung, wenn überhaupt, nur durch ihre unmittelbaren Auswirkungen auf die Verkehrssituation auf den Hauptverkehrsstraßen sichtbar wird.

Eine weitere Methode zur Ermittlung der Verkehrslage besteht aus der Erhebung und Auswertung von sogenannten "Floating Car" Daten. Dabei "schwimmt" eine Flotte von Fahrzeugen (Floating Cars) ausgestattet mit GPS-Empfängern und Digitalfunk im Verkehr mit und sendet gleichzeitig die aktuelle Position, Fahrtrichtung und Geschwindigkeit zu einer Zentrale, in der die Daten gesammelt und ausgewertet werden. Oft werden dazu die Flotten der Taxiunternehmen genutzt. Diese Fahrzeuge sind als "Floating Cars" im Verkehrsnetz unterwegs und können Informationen über die die lokale Verkehrslage erfassen. Allerdings liefert die Methode der Nutzung von "Floating Cars" durch deren begrenzte Anzahl keine vollständige Erfassung der Verkehrssituation. Diese Floating Cars liefern zwar auf den von diesen Fahrzeugen abgefahrenen Strecken eine genaue Momentaufnahme der aktuellen Verkehrssituation, jedoch ergibt diese Art der Erhebung von Verkehrsdaten aufgrund der geringen Anzahl der Floating Cars ein zeitlich und räumlich schlecht aufgelöstes Bild der aktuellen Verkehrslage.

Weiterhin ist aus der Druckschrift DE 197 46 570 A1 ist ein Verfahren und eine Vorrichtung zur großflächigen Überwachung der Verkehrssituation eines von Fahrzeugen befahrenen Verkehrswegenetzes bekannt. Dabei werden vom zu überwachenden Gebiet von Flugkörpern aus Luftbildaufnahmen gemacht, und die aufgenommenen Bilder werden einem Bildverarbeitungsvorgang zur Lokalisierung der Verkehrswege des Verkehrswegenetzes und zur Erkennung von darauf befindlichen Fahrzeugen unterzogen. Anhand der erkannten Fahrzeuge wird dann auf die Verkehrslage geschlossen. Großflächige Luftbildsequenzen bestehend aus weitläufig überlappenden Luftbildern hingegen bieten somit die Möglichkeit, die Verkehrslage flächendeckend (inklusive der Nebenverkehrsstraßen) und mit hoher räumlicher Auflösung zu erfassen. Derartige Aufnahmen von Luftbildern können von Flugkörpern, d.h. sich in der Erdatmosphäre bewegenden Sensorträgern, aber auch von Satelliten aus gemacht und bereitgestellt werden. Wenn man dabei das Flugzeug über einem relevanten Bereich kreisen lässt, so ist es abhängig von der Größe der relevanten Region möglich, das Flugzeug innerhalb von bspw. wenigen Minuten zu seinem Ausgangspunkt für den nächsten Überflug zurückkehren zu lassen, um damit eine zeitliche Auflösung der erfassten Messdaten von wenigen Minuten zu erreichen. Durch geeignete Bild-Prozessierung direkt an Bord des Flugzeugs basierend auf automatischen Verfahren zur Ableitung von Verkehrsparametern aus Luftbildern ist es möglich, Verkehrsdaten mit hoher Aktualität zur Verfügung zu stellen.

Besonders wichtig sind Informationen über die Verkehrslage für die Routenplanung der Rettungs- und Hilfskräfte, zum Beispiel in Überschwemmungsgebieten und in Erdbebengebieten. Dabei werden Verkehrsinformationen benötigt, um die Einsatzfahrzeuge und damit die Einsatzkräfte möglichst schnell und sicher an ihr Ziel zu leiten, ohne lange nach Umgehungsstraßen suchen zu müssen. Im Falle von Großereignissen und Katastrophen sind die mit bodengebundenen Sensoren erhobenen Verkehrsdaten meist unzureichend, um die Verkehrsinfrastruktur im Zielgebiet des Ereignisses bestmöglich auszunutzen. Darüber hinaus möchten die verantwortlichen Einsatzzentralen ihre Einsatzkräfte schnellstmöglich und damit auf zeitoptimierten Routen zu den Einsatzorten führen. Außerdem ist im Fall einer Katastrophe mit dem Ausfall der gesamten bodengebundenen Infrastruktur zur Verkehrserfassung zu rechnen. Daher ist eine flächendeckende Verkehrsdatenerfassung inklusive der Nebenstraßen bei gleichzeitiger hoher Aktualität durch ein luftgestütztes System wünschenswert.

Ein Prototyp eines digitalen Luftbildsystems zur Verkehrslageerfassung ist in Börner, A. und Ernst, I. und Ruhe, M. und Sujew, S. und Hetscher, M. "Airborne Camera Experiments for Traffic Monitoring" in: ISPRS XXth Congress, Seiten 1-6, XXth ISPRS Congress, 12 - 23 July 2004, Istanbul, Turkey. ISBN 1682-1777 vorgestellt. Das darin beschriebene System besteht aus einem bildgebenden Sensor mit hoher Bildwiederholrate bis zu 12.5 fps, der an einen Flugkörper montiert ist, einer Funkübertragung zum Boden, und einem Rechner zur Bildverarbeitung und -auswertung verbunden mit der Emfangsanlage der Funkübertragung am Boden. Der Nachteil dieses Systems ist, dass durch die heutzutage mögliche Funkübertragung keine hochaufgelösten digitalen Luftbilder übertragen werden können. Damit wird entweder die Bodenauflösung herabgesetzt oder die Abdeckung der Bilder am Boden reduziert.

Die erhobenen Verkehrsdaten sind im Allgemeinen fehlerbehaftet. Ein übliches Maß für die Güte (Qualität) der Erfassung von Fahrzeugen durch automatische Verfahren in digitalen Luftbildern wird durch die Anzahl richtig detektierter Fahrzeuge, die Anzahl der Fehldetektionen und die Anzahl der nicht detektierten Fahrzeuge bestimmt. Dabei gilt für die Güte der Zusammenhang:

$$G = \frac{n_r}{n_r + n_{fd} + n_{fnd}}$$

mit:

G: Güte,
$n_r$: Anzahl der richtig detektierten Fahrzeuge,
$n_{fd}$: Anzahl Fehldetektionen,
$n_{fbd}$: Anzahl der nicht detektierten Fahrzeuge.

Das angesprochene System und Verfahren von Börner et al. erreicht bspw. eine Qualität der erfassten Verkehrsdaten von ca. 50-60 %. Diese Qualität der Verkehrsdaten ist kaum ausreichend zur Erfassung und Darstellung der aktuellen Verkehrslage und kann mit der Qualität der Verkehrserfassung aus bodengebundener Sensorik (ca. 80%) nicht mithalten. Darüber hinaus ist dieses System ungeeignet, um als Datenquelle für Verkehrssimulationen zur weiteren Entwicklung der Verkehrslage in Frage zu kommen. Außerdem ist eine zuverlässige Ableitung von Reisezeiten aus Verkehrsdaten solch fraglicher Qualität nicht möglich

Aus der WO2010/006361 A1 ist ein Verfahren zur Fahrzeugen anhand von Videosequenzen, die nachts aufgenommen werden, bekannt. Dabei werden Helligkeitsbereiche der Scheinwerfer erkannt und als segmentierte Bildausschnitte weiterverarbeitet. Diese Bildausschnitte werden anschließend anhand von trainierten Klassifikatoren analysiert, um die Fahrzeuge zu erkennen und zu klassifizieren. Durch die Verarbeitung von aufeinanderfolgenden Videobildern können Verkehrsdaten gewonnen werden.

Aus der US 2009/0060278 A1 ist ein Verfahren bekannt, bei dem Videosequenzen mittels verschiedener Klassifikatoren analysiert und daraus Daten zur Weiterverarbeitung gewonnen werden. Damit können bspw. Falschparker erkannt werden. Über lernfähige Hintergrundmodelle werden Veränderungen in den Videosequenzen erkannt und Masken ("Blobs") erzeugt. Die Klassifizierung dieser "Blobs" kann über trainierte Klassifikatoren erfolgen.

Als weiterer Stand der Technik zum Thema Verkehrsdatenerfassung auf Basis von Luftbildaufnahmen wird auf die Veröffentlichungen von Ernst, Ines und Hetscher, Matthias und Zuev, Sergey und Thiessenhusen, Kai-Uwe und Ruhe, Martin, 2005, "New approaches for real time traffic data acquisition with airborne systems", in: Transportation Research Board, TRB 2005 , January 2005 , Washington, und Rosenbaum, Dominik und Kurz, Franz und Thomas, Ulrike und Suri, Sahil und Reinartz, Peter, 2008, "Towards automatic near realtime traffic monitoring with an airborne wide angle camera system", European Transport Research Review, Springer, DOI: 10.1007/s12544-008-0002-1, ISSN 1867-0717, verwiesen.

Aufgabe der Erfindung ist es, ein Verfahren und eine Vorrichtung zur Erfassung von Verkehrsdaten aus digitalen Luftbildsequenzen mit verbesserter Zuverlässigkeit und verringerter Rechenzeit bereitzustellen. Insbesondere sollen möglichst schnell und effizient aktuelle Straßenverkehrsdaten aus digitalen Luftbildern extrahiert werden, um den Nutzern eine großflächige und aktuelle Verkehrslage zur Verfügung zu stellen, die nicht nur eine präzise Darstellung der Verkehrslage, sondern auch eine Erstellung einer Prognose zur weiteren Entwicklung der Verkehrslage ermöglicht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft ein Verfahren zur Ermittlung von Verkehrsdaten aus einer Sequenz sich teilweise überlappender, georeferenzierter digitaler Luftbilder, in denen von Fahrzeugen benutzbare Verkehrswege eines Verkehrswegenetzes abgebildet sind, wobei zur Ermittlung der Verkehrsdaten in der Sequenz von digitalen Luftbildern eine Fahrzeugerkennung und ein Fahrzeugtracking erfolgt. Das Verfahren zeichnet sich dadurch aus, dass die Fahrzeugerkennung lediglich in Bilddaten eines ersten digitalen Luftbildes der Sequenz mittels eines ersten und eines zweiten Klassifikators erfolgt, wobei mittels des ersten Klassifikators in den Bilddaten potentielle Fahrzeugobjekte anhand von trainierten Form- und Strukturmerkmalen bestimmt werden, diejenigen Bilddaten, die potentielle Fahrzeugobjekte repräsentieren, segmentiert werden, um segmentierte Bilddaten zu erhalten, und mittels des zweiten Klassifikators in den segmentierten Bilddaten die Fahrzeuge anhand von trainierten Farb- und Form- und Strukturmerkmalen bestimmt werden. Diese Vorgehensweise ermöglicht eine gegenüber dem Stand der Technik präzisere und Rechenzeit sparende Ermittlung von Verkehrsdaten aus einer Sequenz von digitalen Luftbildern.

Die Luftbildsequenzen bestehen dabei bevorzugt aus sich hinreichend überlappenden, in kurzem zeitlichem Abstand aufeinanderfolgend aufgenommenen, digitalen Luftbildern. Innerhalb dieser Luftbildsequenz werden Fahrzeuge erfindungsgemäß in einem ersten Luftbild der Luftbildsequenz erkannt und mittels eines Fahrzeugtrackingverfahrens in den nachfolgenden Luftbildern der Sequenz nachverfolgt. Das Fahrzeugtracking von im ersten digitalen Luftbild erkannten Fahrzeugen in den nachfolgenden Luftbildern der Sequenz erfolgt bevorzugt durch ein Matching-Verfahren, insbesondere ein Template-Matching-Verfahren. Das Matching-Verfahren bzw. das Template-Matching-Verfahren sind dem Fachmann als Verfahren zur Bilddatenverarbeitung bekannt, so dass auf weitere Ausführungen verzichtet wird und auf den einschlägigen Stand der Technik verwiesen wird. Das Template-Matching-Verfahren erfolgt vorzugsweise auf Basis einer normierten Kreuzkorrelation, wobei das Template zunächst auf Basis des ersten Luftbildes erzeugt wird und im nachfolgenden Luftbild der Sequenz innerhalb eines vorgegebenen Suchbereichs gesucht wird. Weiterhin erfolgt das Template-Matching-Verfahren bevorzugt auch abhängig von Farbmerkmalen der Templates.

Somit sind für jedes in dem ersten Luftbild erkannte Fahrzeug nicht nur eine Position zu einem Zeitpunkt, sondern mehrere Positionen zu unterschiedlichen Zeitpunkten bekannt, woraus für jedes Fahrzeug direkt die Momentangeschwindigkeit als auch die Fahrtrichtung ermittelt werden kann. Damit kann der Verkehrsfluss direkt ermittelt werden.

Eine vorteilhafte Weiterbildung des Verfahrens zeichnet sich dadurch aus, dass der erste und/oder der zweite Klassifikator mittels eines Boosting-Algorithmus, insbesondere mittels eines AdaBoosting Algorithmus, aus mehreren Basisklassifikatoren kombiniert ist. Boosting Verfahren haben ihren Ursprung in der PAC (Probably Approximately Correct) Lerntheorie. Das sogenannte "Boosting" basiert auf der Idee, verschiedene schwache PAC-Lerner (Basisklassifikatoren) zu einem starken Klassifikator zu booten". Man versucht die Ergebnisse von einem Basisklassifikator, der vielleicht nur etwas bessere Ergebnisse erzielt als ein reiner Zufallsprozess, zu verbessern, indem man ihn wiederholt auf veränderte Versionen der Daten anwendet. Es handelt sich dabei also um ein Verfahren aus dem Meta-Learning, mit dem Ziel die Genauigkeit eines Lernalgorithmus unter Zuhilfenahme von resampling Methoden zu verbessern. AdaBoost ist eines der populärsten Boosting Verfahren und erlaubt die Kombination von mehreren schwachen Basisklassifikatoren (schwachen Hypothesen, Basishypothesen) zu einem starken Klassifikator (strong learner).

Eine weitere bevorzugte Weiterbildung des Verfahrens zeichnet sich dadurch aus, dass Form- und Strukturmerkmale in den Bilddaten und/oder den ersten Bilddaten unter Verwendung von Haar-Wavelets und/oder Gabor-Wavelets und/oder Haar-Bündelgraphen und/oder Gabor-Bündelgraphen bestimmt werden. Aus der Gruppe der Wavelets haben sich, wie Untersuchungen gezeigt haben, insbesondere die vorstehenden Wavelets als effektiv herausgestellt.

Vorteilhaft ist es weiterhin, dass der zweite Klassifikator auf einem Support-Vector-Machinen Algorithmus basiert. Eine Support Vector Machine (SVM) ist ein Klassifikator, der eine Menge von Objekten so in Klassen unterteilt, dass um die Klassengrenzen herum ein möglichst breiter Bereich frei von Objekten bleibt. Die SVM ist auch als ein sogenannter "Large Margin Classifier" bekannt.

Um die Rechenzeit zu reduzieren ist es vorteilhaft, dass mittels des ersten Klassifikators die potentiellen Fahrzeugobjekte ausschließlich in denjenigen Bilddaten des ersten digitalen Luftbildes bestimmt werden, die Suchbereiche repräsentieren, die entlang im ersten Luftbild identifizierter Verkehrswege festgelegt wurden, wobei eine sich orthogonal zur Längsachse eines jeweiligen Verkehrsweges erstreckende Breite des Suchbereiches in Abhängigkeit von einer Anzahl von Fahrspuren des Verkehrsweges gewählt wird, und die Identifikation der Verkehrswege im ersten Luftbild unter Verwendung einer bereitgestellten Verkehrswegenetz-Datenbank erfolgt. Weiterhin werden bevorzugt im digitalen ersten Luftbild gekrümmt abgebildete Verkehrswege und zugehörige Suchbereiche in geradlinige Verkehrswege und zugehörige geradlinige Suchbereiche einheitlicher Ausrichtung abgebildet, und die Fahrzeugerkennung aus-

schließlich für die geradlinigen Suchbereiche durchgeführt. Damit entfällt eine sonst erforderliche Koordinatentransformation bei der Anwendung der Wavelets. Eine weitere Reduzierung der erforderlichen Rechenzeiten kann dadurch bewirkt werden, dass in den Suchbereichen mittels eines trainierten Verkehrsflächen-Klassifikators eine Identifizierung von Verkehrsflächen, insbesondere von Fahrbahnflächen erfolgt, und die Fahrzeugerkennung ausschließlich für die identifizierten Verkehrsflächen erfolgt.

Um die Zuverlässigkeit der Fahrzeugerkennung zu steigern wird vorgeschlagen, dass im ersten digitalen Luftbild durch einen Schatten-Klassifikator Schattenbereiche und schattenfreie Bereiche identifiziert werden. Dies kann alternativ dadurch erfolgen, dass durch eine 3D Analyse der Sequenz von digitalen Luftbildern ein digitales 3D-Oberflächenmodell ermittelt wird, und im ersten digitalen Luftbild Schattenbereiche und der schattenfreie Bereiche auf Basis des 3D-Oberflächenmodells und eines Beleuchtungsmodells identifiziert werden. Dabei wird auf Basis des 3D-Oberflächenmodells und anhand eines der Uhrzeit der Aufnahme entsprechenden Sonnenstandes, der Schattenwurf bestimmt. Vorzugsweise werden dabei der erste und/oder der zweite Klassifikator in einer ersten Variante mit einem ersten Trainingsdatensatz trainiert, der auf eine Fahrzeugerkennung in einem digitalen Luftbild ohne Schattenbereiche optimiert ist, in einer zweiten Variante der erste und/oder der zweite Klassifikator mit einem zweiten Trainingsdatensatz trainiert, der auf eine Fahrzeugerkennung in einem Luftbild ausschließlich mit Schattenbereichen optimiert ist, und die erste Variante des Klassifikators auf als schattenfreie identifizierte Bereiche und die zweite Variante des Klassifikators auf als Schattenbereiche identifizierte Bereiche des ersten digitalen Luftbildes angewandt.

Ein zweiter Aspekt der Erfindung betrifft eine Vorrichtung zur Ermittlung von Verkehrsdaten für ein von Fahrzeugen benutztes Verkehrswegenetz, mit einem System zum Aufnehmen von Bildern eines Teils der Erdoberfläche, in welchem sich das Verkehrswegenetzes befindet, und einem Bildauswertesystem, das zur Durchführung des vorstehend beschriebenen Verfahrens ausgebildet und eingerichtet ist. Vorzugsweise wird die Bildverarbeitung und Verkehrsauswertung direkt an Bord des Flugkörpers durchgeführt, d.h. dass sich die Vorrichtung insgesamt an Bord eines Flugkörpers oder Raumschiffes oder Satelliten befindet. Dies ist von Vorteil, da mit den an Bord ermittelten Verkehrsdaten nur ein geringer Datenstrom zu einer Empfangseinheit am Boden gesendet werden muss. Die Verkehrslageerfassung bezieht sich dabei auf einzelne Luftbilder, mit denen eine automatische Erfassung der Position von Fahrzeugen möglich ist.

Die Vorrichtung besteht bevorzugt aus einem oder mehreren Rechnern zur Bildverarbeitung, die an Bord des Flugzeugs mit einem optischen Sensor zur Aufnahme von digitalen Luftbildern verbunden sind. So können die digitalen Luftbilder an Bord des Flugzeugs ausgewertet werden. Anschließend werden die im Vergleich zu den erfassten Bilddaten nur ein Bruchteil der Datenmenge umfassenden Verkehrsdaten zum Boden übertragen. Dies ermöglicht die Verarbeitung hoch aufgelöster digitaler Bilddaten, die je nach Abbildungsmaßstab entweder detailreicher sind oder einen größeren Bereich am Boden pro Aufnahme bei gleichem Detaillierungsgrad wie der Stand der Technik abdecken.

Die erfindungsgemäße Vorrichtung bietet im Vergleich zu bodengebundener Infrastruktur den Vorteil der großflächigen und gleichzeitigen nahezu lückenlosen Erfassung von Verkehrsdaten von den Hauptstraßen bis hin zur kleinsten Nebenstraße.

Die vorliegende Erfindung beschreibt somit ein Verfahren und eine Vorrichtung, mit dem die Erfassung der Verkehrslage ohne bodengebundene, fest installierte Infrastruktur möglich ist. Gleichzeitig ermöglicht die Erfindung eine flächendeckende Erfassung der Verkehrslage inklusive aller Haupt- und Nebenstraßen, d.h. die Auswertung großflächiger Bilder bei gleichzeitig hoher Bodenauflösung. Darüber hinaus ist die in der vorliegenden Erfindung beinhaltete Vorrichtung in der Lage, auch bei Ausfall der bodengebundenen Infrastruktur, wie z.B. im Katastrophenfall möglich, die Verkehrslage zu erfassen.

Wie Versuche gezeigt haben, lässt sich eine qualitativ hochwertige Fahrzeugerkennung (G = 80%) durch die vorstehend beschriebene Kombination von zwei verschiedenen Maschinenlernalgorithmen (Adaboost und SVM) erreichen. Im Stand der Technik werden die Fahrzeuge basierend auf einer Kantendetektion anhand von für Fahrzeuge typischen Konturen (Rechtecke) entsprechender Größe erkannt. Hierbei führt die Detektion eines Fahrzeugs an der aus der jeweiligen Detektion im ersten digitalen Luftbild zu erwartenden Stelle im zweiten Luftbild zur Bestätigung der These, dass es sich bei der Detektion im ersten Bild wirklich um ein Fahrzeug handelt. Im Gegensatz hierzu wird vorliegend die Fahrzeugnachverfolgung über die Luftbildsequenz bevorzugt anhand eines Farb-Matching-Verfahren basierend auf normierter Kreuzkorrelation durchgeführt. Dabei wird in einem ersten Luftbild für jedes erkannte Fahrzeugs ein Template-Bild angelegt. Die Position des jeweiligen Fahrzeugs wird in das zeitlich nachfolgende georeferenzierte Luftbild transferiert und anhand der zu erwartenden Höchstgeschwindigkeit wird ausgehend von der transferierten Position, ein Suchraum in Fahrtrichtung aufgespannt, innerhalb diesem das Template-Bild des jeweiligen Fahrzeugs aus dem ersten Luftbild (= das Luftbild in dem die Fahrzeugerkennung erfolgt) nun an jeder Position innerhalb des Suchraums korreliert wird. Das Maximum der Korrelation innerhalb des Suchraums wird nun als Treffer gewertet, wenn es einen gewissen Schwellwert überschreitet. Damit ist das im ersten Bild der Sequenz detektierte Fahrzeug im zweiten Bild der Sequenz wiedergefunden und die Geschwindigkeit des Fahrzeugs kann direkt aus der Positionsänderung in Geokoordinaten des Fahrzeugs in den beiden georeferenzierten Bildern und dem Zeitabstand der Aufnahmen abgeleitet, und nochmals auf Plausibilität überprüft werden. Diese Fahrzeugnachverfolgung kann nun weiterhin auf nachfolgende Bildpaare der Bildsequenz angewendet werden, solange ein hinreichender Überlapp dieser Bilder mit dem ersten Luftbild besteht. Besteht dieser nicht mehr, so wird wiederum eine neue Fahrzeugerkennung durchgeführt mit weiteren Fahrzeugnachverfolgungen in den darauffolgenden Luftbildern.

Die Kombination der Fahrzeugerkennung durch einen Adaboost-Klassifikator, eine SVM und einer Fahrzeugverfolgung durch ein Template-Matching Verfahren bildet ein hocheffizientes Verfahren zur Erfassung von Verkehrsdaten in einer Qualität, die die Qualität terrestrisch erfasster Verkehrsdaten erreicht und ggf. übertrifft.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung, gegebenenfalls auch unabhängig von den Ansprüchen, und können insbesondere zusätzlich auch Gegenstand einer oder mehrerer separaten Anmeldung/en sein. Gleiche, ähnliche und/oder funktionsgleiche Teile sind mit gleichen Bezugszeichen versehen.

Es zeigen:

Fig. 1　schematische Darstellung einer Ausführungsform des erfindungsgemäßen Verfahrens, und

Fig. 2　schematischer Darstellung einer erfindungsgemäßen Vorrichtung, die in Funkkontakt mit einer Bodenstation steht.

Die Erfindung stellt eine Vorrichtung und ein Verfahren zur echtzeitfähigen Erfassung von Verkehrsdaten aus großflächigen und hochaufgelösten digitalen Luftbildsequenzen bereit. Nachfolgend wird die Erfindung auf Basis von an Bord eines Flugkörpers, bspw. eines Flugzeugs erfassten Luftbildern weiter erläutert. Die Vorrichtung umfasst hierzu bevorzugt einen elektronischen Rechner, bspw. einen Computer oder mehrere verbundene elektronische Rechner zur digitalen Bildverarbeitung. Dabei werden auf diesem Rechner Verfahren zur Fahrzeugerkennung in einzelnen Luftbildern durch Maschinenlernalgorithmen realisiert, welche bspw. eine auf Haar-Merkmalen basierende Merkmalsextraktion implementiert. Die Fahrzeugerkennung liefert dabei zu jedem erkannten Fahrzeug eine Positionsangabe. Bezieht man die gemessenen Positionen der jeweiligen Fahrzeuge auf das jeweilige Straßensegment, auf dem sich diese Fahrzeuge befinden, erhält man sofort die lokale Verkehrsdichte, welche eine wichtige Kenngröße der aktuellen Verkehrslage ist. Weiterhin sind auf der Recheneinheit Verfahren zur Fahrzeugnachverfolgung von vorher in einzelnen digitalen Luftbildern erkannten Fahrzeugen über die Luftbildsequenz hinweg realisiert durch Bildverarbeitungs-Matching-Verfahren, implementiert. Dadurch wird die Positionsänderung des jeweiligen Fahrzeugs bestimmt und unter Zuhilfenahme des Zeitabstands der einzelnen digitalen Luftbilder untereinander wird die momentane Geschwindigkeit des jeweiligen Fahrzeugs errechnet. Bezieht man die gemessenen Positionen und Geschwindigkeiten der jeweiligen Fahrzeuge auf das jeweilige Straßensegment, auf dem sich diese Fahrzeuge befinden, ermöglicht dies eine Ableitung des aktuellen Verkehrsflusses, welcher eine weitere wichtige Kenngröße der Verkehrslage ist. In anderen möglichen Ausgestaltungen der Erfindung kann diese Recheneinheit, auf der die genannten Verfahren implementiert sind, beispielsweise auch aus einer Graphikkarte oder mehreren Graphikkarten oder aus einem oder mehreren FPGAs oder ähnlichem bestehen. Diese möglichen Ausgestaltungen der Erfindung werden im Folgenden als Rechner zusammenfassend bezeichnet.

Das Verfahren zur hoch effizienten Fahrzeugerkennung besteht in einer Ausführungsform aus der Kombination zweier Maschinenlernalgorithmen. Die Erkennung von Fahrzeugen im digitalen Luftbild beruht dabei auf zwei auf die Erkennung von Fahrzeugen trainierten Klassifikatoren. Das Training geschieht dabei durch Merkmalsextraktion aus Trainingsdaten, bestehend aus einem Datensatz von Beispielautos ausgeschnitten aus digitalen Luftbildern, die die gleiche Auflösung wie die bspw. im Flugbetrieb aufzunehmenden Luftbilder besitzen, sowie zumindest einem Datensatz mit Gegenbeispielen, wie z.B. Fahrbahnmarkierungen, Schilderbrücken, Baumschatten und ähnliches. Während der Trainingsphase, die vor Einsatz des Systems am Boden einmalig durchgeführt wird, sucht sich der jeweilige Algorithmus in verschiedenen Iterationen die zur Trennung der bei den Klassen Fahrzeuge / Nicht-Fahrzeuge am besten geeigneten Merkmale aus der Menge aller Merkmale heraus. Zur Merkmalsextraktion werden bspw. die Haar-Merkmale angewandt.

Während des Betriebs der Vorrichtung in der Luft wird der so auf Fahrzeugerkennung trainierte Klassifikator (erster oder zweiter Klassifikator) auf die aufgenommenen Luftbilder angewandt. Der Klassifikator liefert für jedes Bild ein Bild mit Konfidenzwerten als Grauwerte. Diese Grauwerte geben pixelweise die Wahrscheinlichkeit an, dass an dieser Stelle ein Fahrzeug erkannt wurde.

Die Schwierigkeit besteht nun darin, dieses pixelbasierte Konfidenzbild in eine tatsächliche Fahrzeugerkennung umzuwandeln. Dabei bilden Pixel mit hoher Wahrscheinlichkeit im Konfidenzbild helle Blobs. Die Umwandlung von hellen Pixeln im Konfidenzbild in einzelne Fahrzeugerkennung erfolgt bspw. durch Abschluss der einzelnen Regionen am Nulldurchgang, der den Rand der jeweiligen Region bildet. Die so erzeugten Regionen mit einer möglichen Fahrzeugerkennung (ermittelt durch Anwendung des ersten Klassifikators) werden anschließend mit statistischen Merkmalen (Anwenden des zweiten Klassifikators) bezüglich Farbinformation im I1I2I3 und RGB Farbraum und Geometrie einer weiteren Klassifizierung unterzogen. Anhand dieser Merkmale wird der zweite Klassifikator, ein durch Kreuzvalidierung optimierter, Maschinenlernalgorithmus, die Support-Vektor Maschine (SVM), trainiert, um die bis dahin erhaltenen Interessen-Regionen in tatsächliche Fahrzeugerkennungen und Nicht-Fahrzeuge zu unterteilen. Das Training des zweiten Klassifikators erfolgt wiederum wie beim ersten Klassifikator vor Einsatz des Systems an hand eines umfangreichen Datensatzes. Die Qualität der Fahrzeugdetektion wird im Vergleich zu herkömmlichen Interestoperatoren und einmaliger Anwendung von Klassifikationsalgorithmen deutlich gesteigert.

Um den Suchbereich für die Fahrzeugerkennung einzuschränken, wird um jede im digitalen Luftbild befindliche Straße ein Bildpuffer entlang der aus einer Straßendatenbank entnommenen und ins Bild projizierten Straßenachsen parallel zu diesen ausgeschnitten, wobei die Breite dieses Bildpuffers von der Anzahl der jeweiligen Fahrspuren, ebenfalls in der Straßendatenbank abgespeichert, abhängt. Eine weitere Einschränkung des Suchbereichs geschieht durch eine Vorklassifizierung der Straßenbereiche in Abgrenzung zu Häuseroder Vegetationsbereichen oder Ähnlichem unter Zuhilfenahme der Farbinformation des Bildes und/oder durch eine Detektion der Fahrbahnrand-Markierungen oder der Kante zwischen Straße und Vegetation.

Eine weitere Optimierung der Fahrzeugerkennung besteht in der gesonderten Behandlung von Schattenbereichen, wie sie z.B. durch die Abschattung durch Gebäude in der Stadt oder durch Bäume auftreten kann. Dabei werden der erste und zweite Klassifikator mit einem speziellen Trainingsdatensatz gezielt auf Schattenbereiche optimiert und diese spezielle "Schatten"-Klassifikatoren ausschließlich in Schatten bereichen eingesetzt. Dazu ist eine Erkennung und/oder Vorhersage von Schattenbereichen beispielsweise durch eine Kontrastanalyse in den digitalen Luftbilder oder eine 3D Analyse der Luftbildsequenz zur Erzeugung eines Digitalen Oberflächenmodells bei gleichzeitiger Berücksichtigung eines Beleuchtungsmodells notwendig.

Als erster Klassifikator wird bevorzugt der Maschinenlernalgorithmus Adaboost verwendet. Im Stand der Technik wird typischerweise in einem durch bspw. einen Soebel-Kantenfilter erzeugten Kantenbild nach für Fahrzeuge charakteristischen Rechteck-Konturen gesucht. Der Ansatz im Stand der Technik wurde untersucht, und es wurde gezeigt, dass damit eine Qualität der Verkehrsdaten auch in einfachen Szenarien (z.B. Autobahn) kaum über 60% erreicht werden kann. Die vorliegende Verwendung von Maschinenlernalgorithmen hat den Vorteil, dass damit die optimalen Merkmale zur Fahrzeugerkennung auch für verschiedene Beleuchtungssituationen angewendet werden. Dies ist insbesondere der Fall, wenn auch unterschiedliche Beleuchtungssituationen in das Training des ersten und zweiten Klassifikators eingebracht werden. Dies ist eine deutliche Verbesserung gegenüber dem bekannten Ansatz im Stand der Technik, der nur auf eine Beleuchtungssituation hin optimiert werden kann und der bei geänderten Beleuchtungsverhältnissen versagt.

Vorzugsweise werden in den Luftbildern die Pixel im Bereich der Straßen entlang der Straßenachsen gesampelt, so dass die Straßen in dem entstehenden Bild geradegezogen sind. Dies bietet den Vorteil, dass alle Fahrzeuge im so erzeugten Bild gleich ausgerichtet sind, was eine Erkennung der Fahrzeuge, durch den ersten und zweiten Klassifikator enorm erleichtert. So fallen bspw. Rotationen der (bspw. Haar-) Merkmale generell weg, was auch zu einer Beschleunigung der Verfahren zur Fahrzeugerkennung führt und eine Echtzeitanwendung auf aktuellen Rechnern überhaupt erst ermöglicht.

Der durch das Boosting-Verfahren trainierte erste Klassifikator liefert für jeden Pixel im geradegezogenen Straßenbereich eine Wahrscheinlichkeit, dass dieser Pixel zu einem Fahrzeug gehört. Pixelgruppen mit hoher Wahrscheinlichkeit müssen nun durch einen Interest-point Operator oder andere Gruppierungsverfahren für jedes Fahrzeug zu einer Einzelerkennung zusammengefasst werden. Die in der Mustererkennung üblichen Verfahren zur Gruppierung solcher Pixel (wie z.B. Erosion, Dilatation, Schwellwerte, Hysereseschwellwerte, LoG, Hessian-Laplace, grey-level-blob trees und ähnliche) sind meist nicht Beleuchtungs- bzw. Kontrastinvariant und daher auch für ein operationelles Verfahren zur Fahrzeugerkennung nicht geeignet. Außerdem lieferten herkömmliche Verfahren in eigenen Tests nicht die angestrebte Qualität der Detektion.

Beim erfindungsgemäßen Verfahren werden daher bevorzugt die Regionen (Blobs) mit hoher Wahrscheinlichkeit einer Fahrzeugerkennung anhand der Nulldurchgänge am Rand der Region abgeschlossen. Diese Regionen werden dann mittels des zweiten Klassifikators basierend auf einer Support Vektor Maschine unter Berücksichtigung von Farb- und Geometriemerkmalen, die genau wie der Adaboost-Klassifikator vor dem operationellen Einsatz der Vorrichtung und des Verfahrens durch einen Trainingsdatensatz auf eine nahezu perfekte Trennung der beiden Klassen Fahrzeuge und Nicht-Fahrzeuge trainiert wurde, nochmals klassifiziert. Dabei können wiederum Situationen mit unterschiedlicher Beleuchtung und unterschiedlichem Kontrast in das Training mit einfließen und damit ein weitgehend beleuchtungsinvarianter zweiter Klassifikator erzeugt werden.

Die Fahrzeugerkennung wird nur in einem ersten Luftbild der Sequenz durchgeführt, und dann wird das jeweilige detektierte Fahrzeug in dem Bildpaar bestehend aus dem ersten Luftbild und dem zeitlich nachfolgenden Bild durch ein Matching-Verfahren wiedergefunden. Das erfindungsgemäße Verfahren hat deutliche Performancevorteile gegenüber dem Stand der Technik, da insgesamt viel weniger Pixel prozessiert werden müssen. Außerdem liefert das Matching-Verfahren bei der Fahrzeugnachverfolgung eine deutlich robustere Zuordnung von erkannten und durch Matching wiedergefundenen Fahrzeugen, als die Einzeldetektion im Stand der Technik, in dem die Erfassung des Fahrzeugs in Geschwindigkeit nur erfolgt, wenn dieses auch in mindestens zwei aufeinanderfolgenden Bildern detektiert wurde. Fehlerkennungen und Fehlzuordnungen von im ersten Luftbild erkannten Fahrzeugen bei der Nachverfolgung können durch einen Vergleich mit der zu erwartenden Fahrtrichtung aus den Straßenachsen der Straßendatenbank und einem Vergleich der Geschwindigkeit mit der zulässigen Höchstgeschwindigkeit (ebenfalls der Straßendatenbank entnommen), bei signifikanten Abweichungen bei mindestens einem dieser Messwerte von den erwarteten Werten, identifiziert und gelöscht werden.

Die Vorrichtung der Erfindung zur automatischen Erfassung von Verkehrsdaten aus digitalen Luftbildern dient insbesondere zur Verwendung im Flugzeug. In einer möglichen Ausgestaltung umfasst die Vorrichtung eine digitale Luftbildkamera mit hinreichender Bildwiederholrate, einen oder mehrere Rechner zur Bildverarbeitung, und einen Sender mit Funk-Sendeantenne. Diese Vorrichtung ist an Bord eines Flugkörpers installiert. Am Boden wird eine Bodenstation mit Empfangsantenne und einem oder mehreren weiteren Rechnern mit Internetanbindung realisiert. Der in den Flugkörper eingebaute Sensor (digitale Luftbildkamera) besteht aus einer Nadir-blickenden Digitalkamera, oder mehreren digitalen Kameras, die verschiedene Blickrichtungen wie zum Beispiel Nadir, Links- und Rechtsblick abdecken. Dies ermöglicht eine großflächige Aufnahme von Luftbildern. Gleichzeitig bietet das Kamerasystem oder die Kamera zwingend eine hohe Bildwiederholrate beispielsweise von mehreren Bildern pro Sekunde, welche eine Erfassung von Bewegungen am Boden wie Fahrzeugbewegungen in den Bilddaten erlaubt. Durch die Zuhilfenahme der Positions- und Fluglagedaten aus einem GPS- und Inertialsystem, welches sich ebenfalls an Bord des Flugzeugs befindet, werden die digitalen Luftbilder der Bildsequenz direkt georeferenziert und dann zur Auswertung an die Vorrichtung zur automatischen Auswertung der Luftbilder hinsichtlich der Verkehrslage weitergeleitet. Eine direkte Georeferenzierung der digitalen Luftbilder ohne Unterstützung durch ein Inertialsystem zur Erfassung der Fluglage ist in einer anderen möglichen Ausgestaltung der Erfindung durchaus denkbar. Aus der Bewegung der einzelnen Fahrzeuge in den aufeinanderfolgenden Bildern der digitalen Luftbildsequenz kann bspw. die Geschwindigkeit einzelner Fahrzeuge ermittelt werden.

Mit dem erfindungemäßen Verfahren können über 80% der in einem ersten Luftbild sichtbaren Fahrzeuge erkannt werden, bei meist weniger als 10% Fehldetektionen (abhängig von der Qualität und Auflösung der Luftbilder). Die so gewonnenen Daten zur Verkehrslage werden in der bevorzugten Ausgestaltung der Erfindung per Funk an die Bodenstation übermittelt und von dort aus den Nutzern zur Verfügung gestellt.

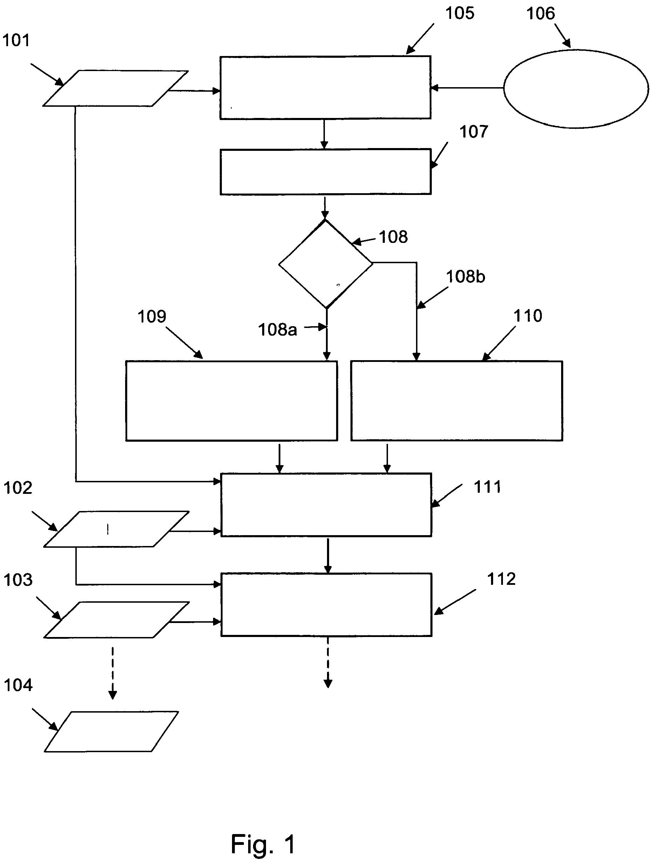

Fig. 1 zeigt ein Ablaufschema eines erfindungsgemäßen Verfahrens. Im ersten georefereinzierten digitalen Luftbild 101 werden im ersten Schritt des Verfahrens die Straßen entlang der Straßenachsen geradegezogen (Modul 105), damit alle Fahrzeuge die gleiche Ausrichtung im Bild haben. Im nächsten Schritt (Modul 107) folgt eine Erkennung der Schattenbereiche. Der Entscheider 108 weist Bilddaten des ersten Luftbildes unterschiedlichen Klassifikatoren zu. So wird für die in den Straßenbereichen von Modul 107 erkannten Bereiche ohne Schatten der Verfahrensweg 108a, und für die in den Straßenbereichen von Modul 107 erkannten Schattenbereiche der Weg 108a weiterverfolgt. Die Schattenregionen der Straße werden im nächsten Schritt an die für Schattenregionen optimierten Fahrzeugklassifikatoren (Modul 110) übergeben, die Regionen mit voller Ausleuchtung werden von den mit Trainingsdaten auf voller Ausleuchtung trainierten Klassifikatoren (Modul 109) übergeben. Im nächsten Schritt gehen die Fahrzeugdetektionen im ersten Luftbild in die Fahrzeugverfolgung ein. An jeder Stelle mit einer Fahrzeugerkennung im ersten Bild wird ein Template-Bild von wenigen Pixeln Ausmaß des erkannten Objekts angelegt. Dieses Template-Bild wird über den zu erwartenden Suchbereich im nächsten Bild der Bildsequenz (hier das zweite Luftbild 102) geschoben und an jeder Position des Suchbereichs im Farbraum korreliert. Das Maximum des Korrelationskoeffizienten zeigt das wiedergefundene Fahrzeug im Luftbild 102 an, die Position an der das Maximum erreicht wurde entspricht der Position des nachverfolgten Fahrzeugs. Die Fahrzeugverfolgung kann nun auf das nächste Bildpaar (zweites Luftbild 102 und drittes Luftbild 103) und sukzessive auf weitere nachfolgende Bildpaare angewandt werden, solange ein hinreichender Überlapp der Bilder zum ersten Luftbild 101 der Bildsequenz besteht.

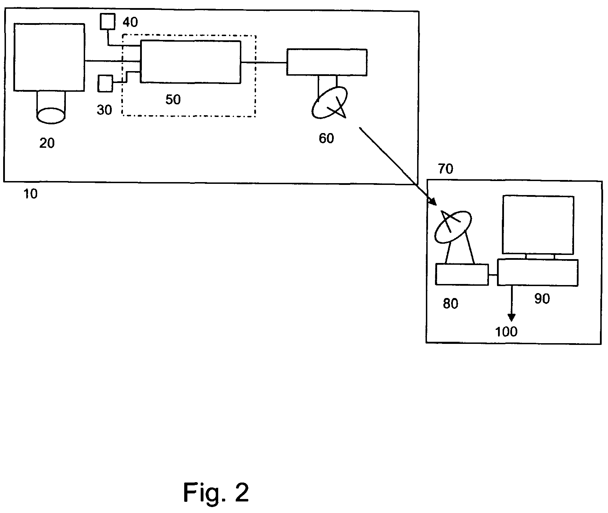

Fig. 2 zeigt eine schematische Darstellung einer erfindungsgemäßen Vorrichtung. Im Flugkörper 10 sind ein optischer Luftbildsensor 20, ein Inertialsystem (IMU) 30 und ein GPS-System 40, mit einem Rechner zur Bildverarbeitung 50 verbunden, der wiederum mit einer Funk-Sendeeinheit 60 verbunden ist. Der Luftbildsensor 20 nimmt digitale Luftbildsequenzen auf und überträgt diese an den Rechner 50. Die einzelnen digitalen Luftbilder werden Anhand der Lage- und Positionsdaten des Flugzeugs zum jeweiligen Zeitpunkt der entsprechenden Luftaufnahme, die vom Inertialsystem 30 und GPS-System 40 fortlaufend an den Rechner 50 übertragen werden, im Rechner 50 direkt georeferenziert. Im Rechner 50 ist dazu eingerichtet und ausgeführt, dass das erfindungsgemäße Verfahren zur automatischen Verkehrsdatenerfassung aus digitalen Luftbildern ausgeführt werden kann. Die Bilder der aufgenommenen Luftbildsequenz werden somit im Rechner 50 erfindungsgemäß ausgewertet und die entsprechenden Verkehrdaten erzeugt. Die so im Rechner 50 gewonnenen Verkehrsdaten werden durch die Sendeeinheit 60 per Funk an die Bodenstation 70, bestehend aus einer Funk-Empfangseinheit 80 und einem Rechner 90 mit Internetanbindung 100 übertragen. Die Empfangseinheit empfängt hierbei die gewonnenen Verkehrsdaten und überträgt diese an den Rechner 90. Vom Rechner 90 aus werden die Verkehrsdaten dann im Internet den Nutzern zur Verfügung gestellt.

Bezugszeichenliste

10    Flugkörper, Flugzeug
20    Luftbildsensor, bspw. Luftbildkamera
30    Intertialsystem
40    GPS-Sensor
50    Rechner
30    Sender mit Sendeantenne
70    Bodenstation
80    Empfangseinheit
90    Rechner
100   Internetanbindung
101   erstes Luftbild einer Sequenz
102   zweites Luftbild der Sequenz
103   drittes Luftbild der Sequenz
104   n-tes Luftbild der Sequenz
105   Modul zum Geradeziehen der Straßen im Bild entlang der Straßenachsen
106   Straßendatenbank
107   Modul zur Schattendetektion in den Straßenbereichen
108   Entscheider: für die in den Straßenbereichen von Modul 107 erkannten Bereiche ohne Schatten wird der Verfahrensweg 108a weiterverfolgt, für die in den Straßenbereichen von Modul 107 erkannten Schattenbereiche wird der Weg 108b weiterverfolgt
109   Modul zur Fahrzeugerkennung mit dem ersten und dem zweiten Klassifikator, die jeweils mit schattenfreien Trainingsdaten trainiert wurden, im ersten geradegezogenen Luftbild
110   Modul zur Fahrzeugerkennung mit dem ersten und dem zweiten Klassifikator, die jeweils für Schattenbereiche optimierten Trainingsdaten trainiert wurden, im ersten geradegezogenen Luftbild
111   Modul zur Fahrzeugverfolgung von im ersten Luftbild erkannten Fahrzeugen über das Bildpaar
112   Modul zur Fahrzeugverfolgung der erkannten Fahrzeuge über das nächste Bildpaar

**Patentansprüche**

1.  Verfahren zur Ermittlung von Verkehrsdaten aus einer Sequenz sich teilweise überlappender, georeferenzierter digitaler Luftbilder(101-104), in denen von Fahrzeugen benutzbare Verkehrswege eines Verkehrswegenetzes abgebildet sind, wobei zur Ermittlung der Verkehrsdaten in der Sequenz von digitalen Luftbildern eine Fahrzeugerkennung und ein Fahrzeugtracking erfolgt und das Fahrzeugtracking der im ersten digitalen Luftbild (10) bestimmten Fahrzeuge in den nachfolgenden Luftbildern der Sequenz mittels eines Matching-Verfahrens erfolgt, **dadurch gekennzeichnet, dass** die Fahrzeugerkennung lediglich in Bilddaten eines ersten digitalen Luftbildes (101) der Sequenz mittels eines ersten und eines zweiten Klassifikators erfolgt, wobei

    - mittels des ersten Klassifikators in den Bilddaten potentielle Fahrzeugobjekte anhand von trainierten Form- und Strukturmerkmalen bestimmt werden,
    - diejenigen Bilddaten, die potentielle Fahrzeugobjekte repräsentieren, segmentiert werden um segmentierte Bilddaten zu erhalten, und
    - mittels des zweiten Klassifikators in den segmentierten Bilddaten die Fahrzeuge anhand von trainierten Farb- und Form- und Strukturmerkmalen bestimmt werden.

2.  Verfahren gemäß Anspruch 1, **dadurch gekennzeichnet, dass** das Matching-Verfahren ein Template-Matching-Verfahren ist.

3.  Verfahren gemäß Anspruch 1 oder 2, **dadurch gekennzeichnet, dass** der erste und/oder der zweite Klassifikator mittels eines Boosting-Algorithmus, insbesondere mittels eines AdaBoosting Algorithmus, aus mehreren Basisklassifikatoren kombiniert ist.

4.  Verfahren gemäß einem der Ansprüche 1 bis 3, **dadurch gekennzeichnet, dass** Form- und Strukturmerkmale in den Bilddaten und/oder den ersten Bilddaten unter Verwendung von Haar-Wavelets und/oder Gabor-Wavelets und/oder Haar-Bündelgraphen und/oder Gabor-Bündelgraphen bestimmt werden.

5.  Verfahren gemäß einem der Ansprüche 1 bis 4, **dadurch gekennzeichnet, dass** mittels des ersten Klassifikators die potentiellen Fahrzeugobjekte ausschließlich in denjenigen Bilddaten des ersten digitalen Luftbildes (101) bestimmt werden, die Suchbereiche repräsentieren, die entlang im ersten Luftbild (101) identifizierter Verkehrswege festgelegt wurden, wobei eine sich orthogonal zur Längsachse eines jeweiligen Verkehrsweges erstreckende Breite des Suchbereiches in Abhängigkeit von einer Anzahl von Fahrspuren des Verkehrsweges gewählt wird, und die Identifikation der Verkehrswege im ersten Luftbild unter Verwendung einer bereitgestellten Verkehrswegenetz-Datenbank erfolgt.

6.  Verfahren gemäß Anspruch 5,

**dadurch gekennzeichnet, dass** im digitalen ersten Luftbild (101) gekrümmt abgebildete Verkehrswege und zugehörige Suchbereiche in geradlinige Verkehrswege und zugehörige geradlinige Suchbereiche einheitlicher Ausrichtung abgebildet werden, und die Fahrzeugerkennung ausschließlich für die geradlinigen Suchereiche erfolgt.

7. Verfahren gemäß Anspruch 5 oder 6,
**dadurch gekennzeichnet, dass** in den Suchbereichen mittels eines trainierten Verkehrsflächen-Klassifikators eine Identifizierung von Verkehrsflächen, insbesondere von Fahrbahnflächen erfolgt, und die Fahrzeugerkennung ausschließlich für die identifizierten Verkehrsflächen erfolgt.

8. Verfahren gemäß einem der Ansprüche 1 bis 7,
**dadurch gekennzeichnet, dass** im ersten digitalen Luftbild (101) durch einen Schatten-Klassifikator Schattenbereiche und schattenfreie Bereiche identifiziert werden.

9. Verfahren gemäß einem der Ansprüche 1 bis 8,
**dadurch gekennzeichnet, dass** durch eine 3D Analyse der Sequenz von digitalen Luftbildern ein digitales 3D-Oberflächenmodell ermittelt wird, und im ersten digitalen Luftbild (101) Schattenbereiche und der schattenfreie Bereiche auf Basis des 3D-Oberflächenmodells und eines Beleuchtungsmodells identifiziert werden.

10. Verfahren gemäß einem der Ansprüche 1 bis 9,
**dadurch gekennzeichnet, dass** der erste und/oder der zweite Klassifikator in einer ersten Variante mit einem ersten Trainingsdatensatz trainiert wird, der auf eine Fahrzeugerkennung in einem digitalen Luftbild ohne Schattenbereiche optimiert ist, in einer zweiten Variante der erste und/oder der zweite Klassifikator mit einem zweiten Trainingsdatensatz trainiert wird, der auf eine Fahrzeugerkennung in einem Luftbild ausschließlich mit Schattenbereichen optimiert ist, und die erste Variante des Klassifikators auf als schattenfreie identifizierte Bereiche und die zweite Variante des Klassifikators auf als Schattenbereiche identifizierte Bereiche des ersten digitalen Luftbildes angewandt wird.

11. Vorrichtung zur Ermittlung von Verkehrsdaten für ein von Fahrzeugen benutztes Verkehrswegenetz, mit einem System zum Aufnehmen von Bildern eines Teils der Erdoberfläche in welchem sich das Verkehrswegenetzes befindet, und einem Bildauswertesystem, das zur Durchführung des Verfahrens gemäß einem der vorstehenden Ansprüche 1 bis 10 ausgeführt und eingerichtet ist.

**Claims**

1. Method for determining traffic data from a sequence of partially overlapping, geo-referenced digital aerial images (101-104), in which transport routes of a transport route network that can be used by vehicles are mapped, wherein in order to determine the traffic data in the sequence of digital aerial images, vehicle identification and vehicle tracking are performed and the vehicle tracking of the vehicles determined in the first aerial image (10) is performed in the following aerial images of the sequence by means of a matching procedure,
**characterized in that**
the vehicle identification is performed only in image data of a first digital aerial image (101) of the sequence by means of a first and a second classifier, wherein

- using the first classifier, potential vehicle objects in the image data are determined on the basis of trained form and structural features,
- the image data that represent potential vehicle objects are segmented in order to obtain segmented image data, and
- using the second classifier, the vehicles are determined in the segmented image data on the basis of trained features relating to colour, shape and structure.

2. Method according to Claim 1,
**characterized in that**
the matching procedure is a template matching procedure.

3. Method according to Claim 1 or 2,
**characterized in that**
the first and/or the second classifier is combined from a plurality of base classifiers by means of a boosting algorithm, in particular by means of an AdaBoosting algorithm.

4. Method according to Claims 1 to 3,
**characterized in that**
the shape-based and structural features in the image data and/or the first image data are determined using Haar wavelets and/or Gabor wavelets and/or Haar bunch graphs and/or Gabor bunch graphs.

5. Method according to any one of Claims 1 to 4,
**characterized in that**
using the first classifier, the potential vehicle objects are determined exclusively in those image data of the first digital aerial image (101) which represent search areas that have been defined along traffic routes identified in the first aerial image (101), wherein a width of the search area extending orthogonally to the longitudinal axis of a respective transport route is chosen according to a number of traffic lanes of the transport route, and the traffic routes in the first aerial image are identified using a transport route network database provided.

6. Method according to Claim 5,
**characterized in that**
traffic routes that are shown as curved in the first digital aerial image (101) and associated search areas are mapped into linear transport routes and associated linear search areas of uniform orientation, and the vehicle identification is performed only for the linear search areas.

7. Method according to Claim 5 or 6,
**characterized in that**
in the search areas, identification of traffic zones, in particular of road surfaces, is carried out using a trained traffic-zone classifier, and the vehicle identification is only carried out for the traffic surfaces identified.

8. Method according to any one of Claims 1 to 7,
**characterized in that**
shaded areas and shadow-free areas are identified in the first digital aerial image (101) by means of a shade classifier.

9. Method according to any one of Claims 1 to 8,
**characterized in that**
by means of a 3D analysis of the sequence of digital aerial images, a digital 3D surface model is calculated and the shaded areas and shadow-free areas in the first digital aerial image (101) are identified on the basis of the 3D surface model and a lighting model.

10. Method according to any one of Claims 1 to 9,
**characterized in that**
in a first variant the first and/or the second classifier is trained with a first training data set which is optimized for vehicle identification in a digital aerial image without shaded regions, in a second variant the first and/or the second classifier is trained with a second training data set that is optimized for vehicle identification in an aerial image with shaded areas only, and the first variant of the classifier is applied to regions identified as shadow-free and the second variant of the classifier to regions of the first digital aerial image identified as shaded areas.

11. Apparatus for determining traffic data for a transport route network used by vehicles, with a system for capturing images of a part of the surface of the earth in which the transport route network is located, and with an image analysis system which is designed and configured for carrying out the method in accordance with any one of the previous Claims 1 to 10.

**Revendications**

1. Procédé de détermination de données de trafic à partir d'une séquence d'images aériennes numériques géoréférencées, se superposant partiellement (101-104), dans lesquelles des voies de trafic utilisables par des véhicules d'un réseau de voies de trafic sont représentées schématiquement, dans lequel afin de déterminer les données de trafic dans la séquence d'images aériennes numériques une reconnaissance de véhicule et un suivi de véhicule a lieu et le suivi de véhicule des véhicules déterminés dans la première image aérienne numérique (10) de la séquence a lieu au moyen d'un procédé d'intercorrélation, **caractérisé en ce que** la reconnaissance de véhicule a lieu uniquement dans les données d'image d'une première image aérienne numérique (101) de la séquence au moyen d'un premier et un deuxième classificateur, dans lequel

- au moyen du premier classificateur des objets de véhicule potentiels dans les données d'image sont déterminés sur la base des caractéristiques de structure et de forme apprises,
- les données d'image, qui représentent les objets de véhicules potentiels, sont segmentés afin d'obtenir des données d'image segmentée et
- au moyen du deuxième classificateur dans les données d'image segmentée les véhicules sont déterminés sur la base des caractéristiques de structure et de forme et de couleur apprises.

2. Procédé selon la revendication 1, **caractérisée en ce que** le procédé d'intercorrélation est un procédé d'intercorrélation de modèle.

3. Procédé selon la revendication 1 ou 2, **caractérisé en ce que** le premier et/ou le deuxième classificateur et combiné au moyen d'un algorithme de Bossting, notamment au moyen d'un algorithme AdaBossting, à partir de plusieurs classificateurs de base.

4. Procédé selon une des revendications 1 à 3, **caractérisé en ce que** les caractéristiques de structure et de forme dans les données d'image et/ou des premières données d'image sont déterminées en utilisant des ondelettes de Gabor et/ou des ondelettes de Haar et/ou des regroupements de graphes de Haar et/ou des regroupements de graphes de Gabor.

5. Procédé selon une des revendications 1 à 4, **caractérisé en ce que** au moyen du premier classificateur les objets de véhicule potentiels sont déterminés exclusivement dans les données d'image de la première image aérienne numérique (101), qui représentent des zones de recherche, qui ont été déterminées le long des voies de trafic identifiées dans la première image aérienne (101), dans lequel une largeur de la zone de recherche s'étendant orthogonalement par rapport à l'axe longitudinal d'une voie des trafic respective est sélectionnée en fonction d'une pluralité de voies de conduite de la voie de trafic, et l'identification des voies de trafic dans la première image aérienne a lieu en utilisant une base de données de réseau de voies de trafic fournie.

6. Procédé selon la revendication 5, **caractérisé en ce que** dans la première image aérienne numérique (101) des voies de trafic représentées schématiquement de manière incurvée et des zones de recherche correspondantes sont représentées schématiquement en voies de trafic en ligne droite et en zone de recherche en ligne droite correspondante à orientation uniforme, et la reconnaissance de véhicule a lieu exclusivement pour les zones de recherche en ligne droite.

7. Procédé selon la revendication 5 ou 6, **caractérise en ce que** dans les zones de recherche au moyen d'un classificateur de surface de trafic appris une identification des surfaces de trafic, notamment des surfaces de voies de transport a lieu et la reconnaissance de véhicule a lieu exclusivement pour les surfaces de trafic identifiées.

8. Procédé selon une des revendications 1 à 7, **caractérisé en ce que** dans la première image aérienne numérique (101) des zones ombrées et des zones sans ombrage sont identifiées par un classificateur d'ombre.

9. Procédé selon une des revendications 1 à 8, **caractérisé en ce que** par une analyse en 3D de la séquence d'images aériennes numériques un modèle de surface en 3D numérique est déterminé, et dans la première image aérienne numérique (101) des zones ombrées et des zones sans ombrage sont identifiées sur la base du modèle de surface en 3D et d'un modèle d'éclairage.

10. Procédé selon une des revendications 1 à 9, **caractérisée en ce que** le premier et/ou le deuxième classificateur est appris dans une première variante avec un premier jeu de données d'apprentissage, qui est optimisée sur une reconnaissance de véhicule dans une image aérienne numérique sans zone d'ombre, dans une deuxième variante le premier et/ou le deuxième classificateur est appris avec un deuxième jeu de données d'apprentissage, qui est optimisée sur une reconnaissance de véhicule dans une image aérienne exclusivement avec des zones d'ombre et la première variante du classificateur est employée sur des zones identifiées comme sans ombrage et la deuxième variante du classificateur est employée sur des zones de la première image aérienne numérique identifiées comme des zones ombrées.

11. Dispositif de détermination de données de trafic pour un réseau de voies de trafic emprunté par des véhicules avec un système de prise d'images d'une partie de la surface terrestre sur laquelle se trouve le réseau de voies de trafic et un système d'évaluation d'images, qui est réalisé est conçu pour mettre en oeuvre le procédé selon une des revendications précédentes 1 à 10.

EP 2 387 017 B1

Fig. 1

13

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19746570 A1
- WO 2010006361 A1
- US 20090060278 A1

**In der Beschreibung aufgeführte Nicht-Patentliteratur**

- **BÖRNER, A. ; ERNST, I. ; RUHE, M. ; SUJEW, S. ; HETSCHER, M.** Airborne Camera Experiments for Traffic Monitoring. *ISPRS XXth Congress,* 12. Juli 2004, ISBN 1682-1777, 1-6
- **ERNST, INES ; HETSCHER, MATTHIAS ; ZUEV, SERGEY ; THIESSENHUSEN, KAI-UWE ; RUHE, MARTIN.** New approaches for real time traffic data acquisition with airborne systems. *Transportation Research Board, TRB 2005,* Januar 2005
- Towards automatic near realtime traffic monitoring with an airborne wide angle camera system. **ROSENBAUM, DOMINIK ; KURZ, FRANZ ; THOMAS, ULRIKE ; SURI, SAHIL ; REINARTZ, PETER.** European Transport Research Review. Springer, 2008